# FASCICULE DE BREVET EUROPEEN

(11) **EP 1 154 121 B1**
(45) Date de publication et mention de la délivrance du brevet: **31.08.2005**
(21) Numéro de dépôt: 01401214.0
(22) Date de dépôt: 11.05.2001
(51) Int. Cl.: E06B 9/68, E06B 9/32, G05B 19/042, G05B 19/42, E06B 9/88, E05F 15/10

(54) **Dispositif perfectionne de commande de systèmes d'occultation motorisés**
Perfektionierte Steuerung für motorgetriebene Verdunkelungsvorrichtungen
Perfectioned control for motor driven shading devices

(30) Priorité: 12.05.2000 FR 0006106; 16.10.2000 FR 0013251
(43) Date de publication de la demande: 14.11.2001
(73) Titulaire: M Four Group, 75008 Paris (FR)
(72) Inventeur: Ischoffen, Pascal, 78510 Triel Sur Seine (FR)
(74) Mandataire: Texier, Christian

(56) Documents cités:
- EP-A- 0 426 577
- EP-A- 0 822 315

## Description

La présente invention concerne le domaine des systèmes d'occultation motorisés, tels que les stores, bannes, volets, portes ou équivalents, destinés notamment à masquer la lumière et/ou à constituer un barrage contre les intrusions.

Par la suite l'élément déplaçable de ces systèmes d'occultation sera dénommé, quelque soit sa constitution ou fonction, par le terme générique « tablier », sans que cette expression puisse être considérée comme limitative.

Plus précisément, la présente invention concerne les moyens de commande de tels systèmes d'occultation.

Par le passé, les systèmes d'occultation du genre précité, étaient entraînés manuellement, entre leur position d'ouverture ou de repliement et leur position de fermeture ou de déploiement, ou encore une position choisie intermédiaire entre celles-ci, par exemple à l'aide d'engrenages actionnés manuellement.

Cependant, pour améliorer le confort des utilisateurs, on a proposé déjà depuis de nombreuses années, de motoriser ces systèmes d'occultation.

Ainsi la plupart des systèmes d'occultation installés de nos jours sont entraînés par un moteur électrique ou motoréducteur. Plus précisément la plupart des systèmes installés aujourd'hui comprennent un tube d'enroulement sur lequel le tablier du système d'occultation est enroulé, dans sa position "d'ouverture" ou de « repliement », et un motoréducteur à commande électrique associé au tube d'enroulement.

Ces systèmes d'occultation et leurs moyens de commande ont donné lieu à une littérature abondante.

Cependant les moyens jusqu'ici proposés ne donnent pas toujours satisfaction.

Le document EP-A-0426577 décrit un dispositif de commande pour élément d'occultation comprenant un microcontroleur associé à des capteurs de position, des mémoires et trois touches : une touche T1 dite de montée, une touche T2 dite de descente et une touche Ti dite intermédiaire. Selon ce document, la commande et le réglage des positions, notamment des positions extrêmes peuvent s'effectuer uniquement à l'aide des trois touches précitées d'interrupteur. Un appui considéré comme impulsionnel intervenant sur l'une des touches permet d'obtenir le positionnement de l'élément d'occultation respectivement dans l'une de trois positions supérieure P1, inférieure P2 ou intermédiaire Pi. Un appui prolongé sur la touche T1 ou T2 permet d'assurer la montée ou la descente de l'élément d'occultation jusqu'au relâchement de cette touche. L'entrée dans le mode réglage s'effectue par un appui simultané sur les deux touches T1 et T2 pendant une durée supérieure à un temps typique de 4 secondes. Le réglage de la position extrême P1 ou P2 est obtenu par un appui sur la touche T1 ou T2 permettant d'obtenir la montée et la descente de l'élément d'occultation. Lorsque ce dernier occupe la position extrême choisie, le relâchement de la touche appuyée permet de couper l'alimentation du moteur. La mémorisation de la position supérieure ou inférieure s'effectue alors par un appui sur la touche intermédiaire Ti, puis un appui sur la touche T1 pour la position T1 ou T2 pour la position P2. La sortie du mode réglage s'effectue, soit automatiquement après un intervalle de temps typiquement de 1,1 minute pendant lequel aucun ordre de commande n'apparaît ou soit par un appui simultané sur les deux touches T1 et T2 pendant une durée typiquement supérieure à 4 secondes. Selon ce document, la position intermédiaire Pi s'effectue par un appui prolongé sur la touche Ti pendant une durée supérieure à une seconde, de manière que la position occupée par l'élément d'occultation soit enregistrée dans une mémoire intermédiaire.

La présente invention a maintenant pour but de proposer de nouveaux moyens permettant d'améliorer le confort des utilisateurs et/ou installateurs.

Un but important de la présente invention est de proposer des moyens permettant de faciliter le règlage de butées de fin de course pour le tablier.

Un autre but important de la présente invention est de proposer des moyens de commande universels, que ce soit dans une version de type commande filaire ou de type commande radio, aptes à commander tout type de système d'occultation, notamment volet ou banne.

Un autre but important de la présente invention est de proposer des moyens de commande adaptés pour une programmation facile par tout installateur, propre à permettre une adaptation aisée sur tout site d'utilisation.

Selon un premier aspect de la présente invention, les buts précités sont atteints grâce à un dispositif de commande du type défini en revendication 1 annexée, laquelle est délimitée sous forme d'un préambule et d'une partie caractérisante par rapport au document EP-A-0426577 précité.

Selon une autre caractéristique avantageuse de la présente invention, les phases d'arrêt ont une durée minimale de 20 ms.

Selon une autre caractéristique avantageuse de la présente invention, le contrôleur est en outre adapté pour mémoriser une position d'arrêt intermédiaire lorsqu'une combinaison choisie de touches est sollicitée.

Selon une autre caractéristique avantageuse de la présente invention, le contrôleur est adapté pour annuler la fonction déplacement pas à pas lorsqu'un réglage d'un arrêt intermédiaire est effectué.

Selon un autre aspect important de la présente invention, les buts précités sont atteints grâce à un dispositif de commande comprenant un circuit de commande d'une motorisation, le circuit comportant au moins une entrée susceptible d'être placée sélectivement dans un état de mode programmation par établissement d'un shunt entre cette entrée et un autre conducteur, telle qu'une ligne d'alimentation électrique, et des moyens sensibles à la durée de cet état pour imposer, selon cette durée, un choix dans un menu parmi différents types prédéfinis de programmation.

Dans le cadre de la présente invention, le terme « programmation » doit ici être compris dans un sens large, comme englobant notamment toute définition de configuration, mode ou fonction.

De même dans le cadre de la présente invention, le terme « shunt » doit être compris dans un sens général. Il englobe tout type de liaison, notamment une liaison directe sous forme d'un court-circuit, une liaison résistive, une liaison capacitive, une liaison unidirectionnelle à diode, etc ...

Selon une première mise en oeuvre, dans le cadre d'une application par commande filaire du circuit précité, le dispositif de commande comprend au moins deux moyens d'actionnement qui, lorsqu'ils sont respectivement validés, sollicitent le système d'occultation, l'un vers sa position de fermeture ou déploiement, et l'autre vers sa position d'ouverture ou repliement, caractérisé par le fait qu'il comprend des moyens aptes à imposer un mode de programmation du dispositif de commande lorsqu'une validation simultanée des deux moyens d'actionnement est détectée.

Selon une deuxième mise en oeuvre, dans le cadre d'une application par commande radio du circuit précité, le dispositif de commande comprend un câble relié au circuit précité comprenant au moins deux fils reliés l'un à une ligne d'alimentation électrique, l'autre à une entrée d'un contrôleur, de sorte que la liaison des deux fils précités impose le passage du circuit de commande dans un mode programmation.

Selon un autre aspect important de la présente invention, les buts précités sont atteints grâce à un dispositif de commande comprenant des moyens de mémorisation des deux fins de course du système d'occultation, correspondant respectivement à une position de fermeture et à une position d'ouverture, caractérisé par le fait que les moyens de mémorisation sont adaptés, après mémorisation préalable d'une première fin de course, pour mémoriser automatiquement en tant que deuxième fin de course, la position à partir de laquelle le système d'occultation est déplacé, dans une phase de programmation, avant d'atteindre ladite première fin de course préalablement mémorisée.

Selon un autre aspect important de la présente invention, les buts précités sont atteints grâce à un dispositif de commande comprenant des moyens sensibles à la durée d'activation de moyens de sollicitation, pour assurer des fonctions actives différentes selon que la durée d'activation est inférieure ou supérieure à au moins un seuil déterminé.

Selon une autre caractéristique avantageuse de la présente invention, les fonctions actives différentes précitées correspondent soit à une fonction de déplacement du système d'occultation, soit à une fonction de mémorisation de fins de course.

D'autres caractéristiques, buts et avantages de la présente invention telle que décrite dans les revendications apparaîtront à la lecture de la description détaillée qui va suivre et en regard des dessins annexés, donnés à titre d'exemples non limitatifs et sur lesquels :
- la figure 1 représente une vue schématique, sous forme de blocs fonctionnels d'un dispositif de commande de système d'occultation, conforme à l'état de la technique, du type commande filaire,
- la figure 2 représente une vue schématique, sous forme de blocs fonctionnels d'un dispositif de commande de système d'occultation, conforme à l'état de la technique, du type commande radio,
- la figure 3 représente une vue schématique, sous forme de blocs fonctionnels d'un dispositif de commande de système d'occultation, conforme à la présente invention, du type commande filaire,
- la figure 4 représente une vue schématique, sous forme de blocs fonctionnels d'un dispositif de commande de système d'occultation, conforme à la présente invention, du type commande radio, et
- les figures 5 à 8 représentent quatre tables de vérité illustrant le procédé de programmation mis en oeuvre dans le cadre de la présente invention.

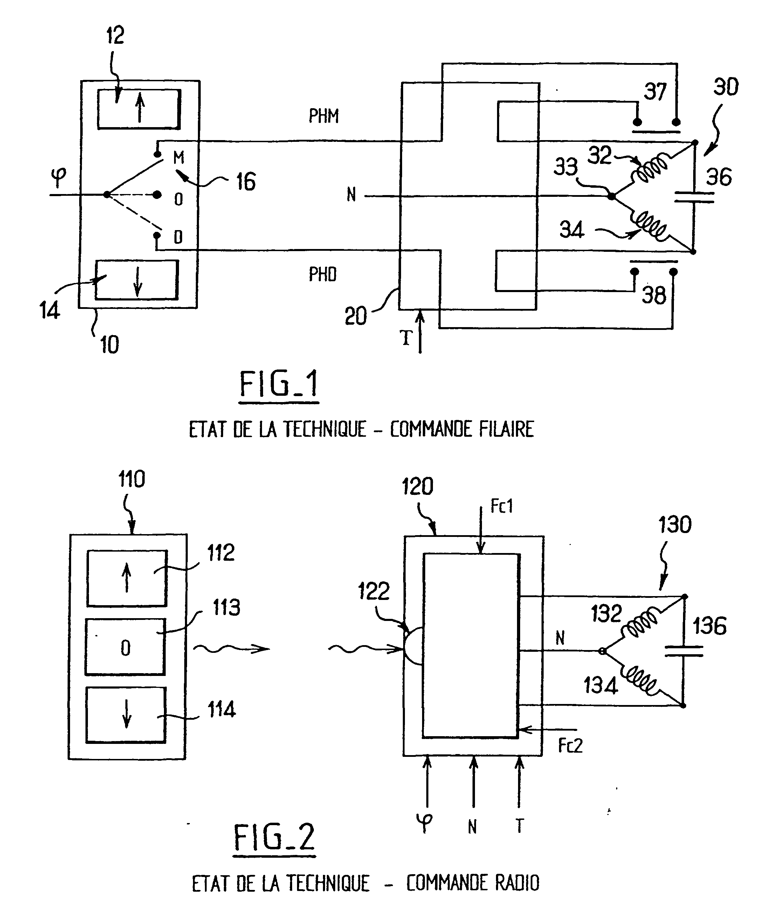

Le système connu de type filaire illustré sur la figure 1 annexée comprend un boîtier de commande 10, une carte de commande 20 et un moteur 30.

Le moteur 30 schématisé sur la figure 1 comprend deux bobinages 32, 34 dont un point commun 33 est relié au neutre N tandis que les secondes extrémités des bobinages 32, 34 sont reliées entre elles par l'intermédiaire d'un condensateur 36. Par ailleurs, ces secondes extrémités, en fonctionnement normal, sont susceptibles d'être reliées alternativement à une ligne de phase. Ainsi, selon le bobinage 32 ou 34 alimenté, le moteur 30 entraîne le système d'occultation vers sa position d'ouverture ou sa position de fermeture.

Le boîtier de commande 10 illustré sur la figure 1 comprend deux boutons de commande 12, 14 aptes à piloter un inverseur 16 à trois positions électriques : une première position O dans laquelle aucun des deux boutons 12, 14 n'est actionné, deux lignes de sortie PHM et PHD du boîtier 10 sont en l'air et le moteur 30 est à l'arrêt, aucun des deux bobinages 32, 34 n'étant alimenté; une deuxième position M dans laquelle le bouton de montée 12 est actionné, l'inverseur 16 est placé sur une position M et la ligne de sortie PHM est reliée à la phase pour assurer l'alimentation du bobinage 32 et le déplacement du système d'occultation vers sa position d'ouverture ; et une troisième position D dans laquelle le bouton de descente 14 est actionné, l'inverseur 16 est placé sur une position D et la ligne de sortie PHD est reliée à la phase pour assurer l'alimentation du bobinage 34 et le déplacement du système d'occultation vers sa position de fermeture.

La carte de commande 20 reçoit par l'intermédiaire d'un câble à quatre fils les lignes de sortie PHM et PHD du boîtier 10 ainsi que la ligne de neutre N et une ligne de terre T. Elle a pour fonction de relier respectivement les lignes de sortie PHM et PHD aux bobinages 32 et 34. La carte de commande 20 conditionne cette liaison selon l'état de contacts de fin de course 37, 38, par exemple montés typiquement en série des lignes PHM et PHD, pour interrompre l'alimentation des bobinages 32, 34, lorsque le système d'occultation atteint l'une de ses extrémités de course autorisées.

On a représenté sur la figure 2 annexée, un système connu à commande radio comprenant un boîtier 110 fixe ou portable, une carte de commande 120 et un moteur 130.

Le moteur 130 comprend typiquement deux bobinages 132,134 reliés au neutre sur un point commun et par ailleurs entre eux par l'intermédiaire d'un condensateur 136 comme indiqué précédemment pour la figure 1.

Le boîtier 110 comprend typiquement trois touches 112, 114, 113, utilisées respectivement pour provoquer l'émission d'une onde électromagnétique codée sollicitant la montée, la descente ou l'arrêt du système d'occultation associé.

La carte 120 comporte un récepteur 122 conçu pour détecter ces ondes, et selon la nature de l'ordre ainsi reçu, assurer l'alimentation de l'un des bobinages 132, 134, à partir d'une ligne de phase, ou l'arrêt de cette alimentation. A cette fin, outre la ligne de phase précitée, la carte 120 reçoit une ligne de neutre N, une ligne de terre T et des signaux FC1 et FC2 représentatifs de fin de course.

Comme on l'a indiqué précédemment, la présente invention peut s'appliquer soit à un système à commande filaire, soit à un système à commande radio.

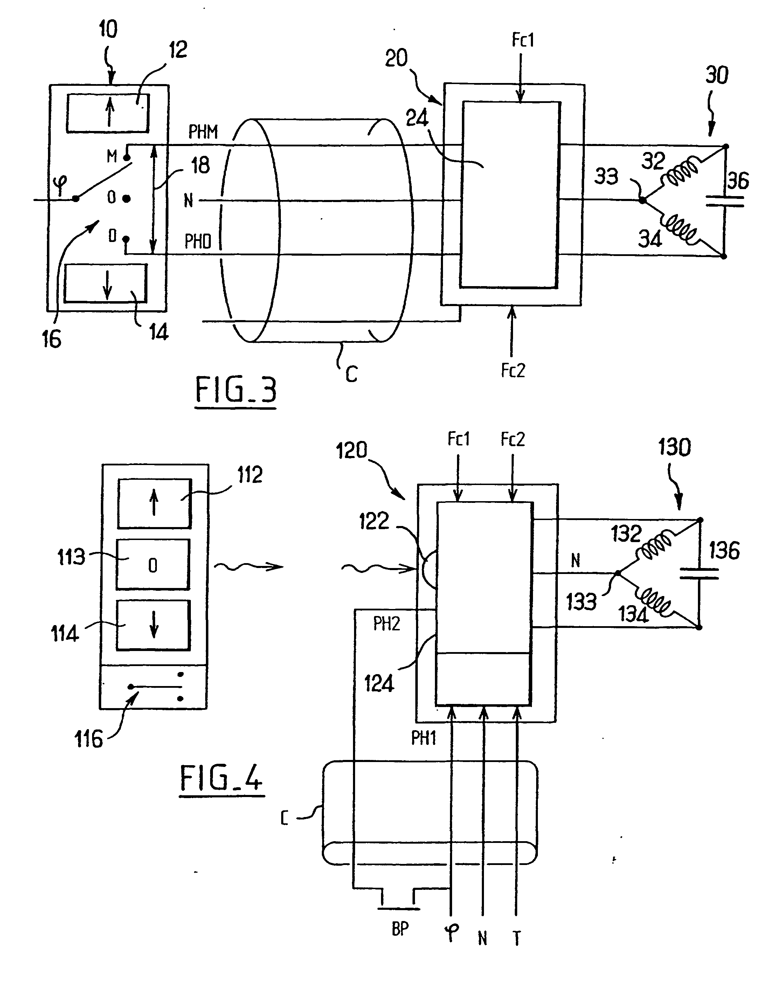

On va tout d'abord décrire, le système à commande filaire conforme à la présente invention illustré sur la figure 3 annexée.

On retrouve sur cette figure, un boîtier de commande 10 conforme à la figure 1, et un moteur 30 conforme à la figure 1. Le système illustré sur la figure 3 comprend en outre une carte de commande 20 comprenant un contrôleur 24. Celui-ci reçoit sur un câble à quatre fils les lignes PHM et PHD issues du boîtier 10 ainsi qu'une ligne de neutre N et une ligne de terre T. En outre, le contrôleur 24 reçoit des signaux FC1 ou FC2 représentatifs de fin de course.

Dans le cadre de l'invention, les signaux représentatifs de fin de course peuvent faire l'objet de nombreuses modalités. Ils peuvent être obtenus à partir de contacteurs mécaniques de fin de course actionnés par le tablier du système d'occultation, ou encore issus d'une cellule surveillant l'intensité ou la phase du courant et/ou de la tension dans les bobinages 32, 34. Cependant, de préférence dans le cadre de l'invention, ces signaux FC1 et FC2 sont générés à partir d'un codeur angulaire associé à l'arbre de sortie du moteur 30, par exemple à partir d'un codeur optique comprenant une roue codée optiquement (par exemple comprenant une alternance de segments transparents et opaques ou encore une alternance de segments réfléchissants et non réfléchissants) associée à une fourchette de détection optique, ou encore une roue codée magnétiquement associé à un capteur associé, par exemple une sonde à effet Hall. Par comptage des impulsions issues de la fourchette ou du capteur, le contrôleur 24 peut connaître directement la position du tablier du système d'occultation, par rapport à une position arbitraire connue d'origine.

Les deux boutons 12, 14 du boîtier 10 constituent deux moyens d'actionnement, qui lorsqu'ils sont respectivement validés, sollicitent le système d'occultation, l'un vers sa position de fermeture, et l'autre vers sa position d'ouverture. Comme on l'a indiqué précédemment, selon l'invention, le contrôleur 24 comprend des moyens aptes à imposer un mode de programmation du dispositif de commande, lorsqu'ils détectent une validation simultanée des deux lignes PHM et PHD.

En pratique, une telle validation simultanée des deux lignes PHM et PHD peut être obtenue , par un installateur, en reliant les deux lignes PHM et PHD entre elles, par exemple à l'aide d'un bornier ou un cavalier 18 prévu spécifiquement à cet effet à l'intérieur du boîtier 10 et en sollicitant l'une des touches 12 ou 14 pour relier ainsi les deux lignes de sortie PHM et PHD simultanément à la phase.

Il faut noter cependant ici que le dispositif conforme à la présente invention fonctionne parfaitement si les connexions de la phase et du neutre provenant du réseau de distribution électrique sont inversées, c'est à dire si la ligne d'alimentation correspondant à la phase est reliée sur le point commun 33 des bobinages, tandis que la ligne de neutre est alors appliquée sur l'entrée du boîtier 10 et par conséquent sur les lignes PHM et PHD.

Pour simplifier le descriptif, par la suite lorsque l'on évoquera la validation des lignes PHM et PHD, l'on fera état de leur liaison préférentielle à la « phase ».

Il est cependant bien entendu qu'il peut s'agir d'une façon plus générale d'une « ligne d'alimentation électrique », phase ou neutre, si les connexions adéquates sont par ailleurs respectées, ou encore indépendamment d'une telle ligne d'alimentation électrique, tout type de liaison entre les lignes concernées PHM et PHD, notamment une liaison directe sous forme d'un court-circuit, une liaison résistive, une liaison capacitive, une liaison unidirectionnelle à diode, etc ...

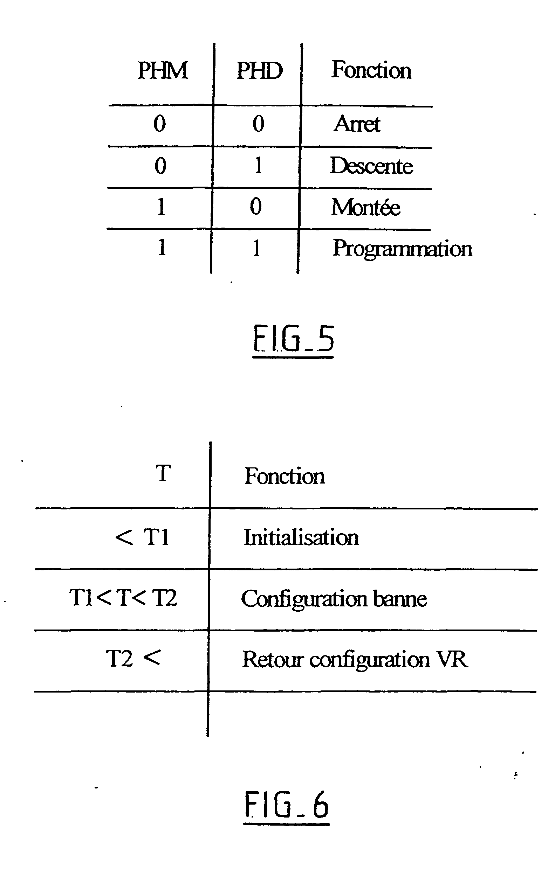

On obtient alors la table de vérité illustrée sur la figure 5 :
- lorsque les deux lignes PHM et PHD sont en l'air à l'état 0, aucun bobinage 32, 34 n'est alimenté. Le moteur est à l'arrêt,
- lorsque seule la ligne PHD est activée à l'état 1, le bobinage 34 est alimenté et le système d'occultation est déplacé vers sa position de déploiement,
- lorsque seule la ligne PHM est activée à l'état 1, le bobinage 32 est alimenté et le système d'occultation est déplacé vers sa position de repliement, et
- lorsque les deux lignes PHM et PHD sont activées à l'état 1, le contrôleur 24 passe en mode programmation, mais interdit l'application simultanée de la tension de phase sur les deux bobinages 32, 34 pour éviter la détérioration du moteur 30.

Ainsi le dispositif conforme à la présente invention exploite un état (liaison simultanée des deux lignes PHM et PHD) qui est interdit selon l'état de la technique car il est selon celui-ci susceptible de déteriorer le moteur 30.

Plus précisément encore, comme on l'a indiqué précédemment, dans le cadre de l'invention, le contrôleur 24 est sensible à la durée de validation simultanée des deux moyens d'actionnement PHM et PHD.

Comme on l'a illustré sur la figure 6, typiquement le contrôleur 24 compare la durée d'activation simultanée des deux moyens d'actionnement PHM et PHD à deux seuils de temps T1 et T2.

Typiquement mais non limitativement, T1 et T2 peuvent être de l'ordre de 5 et 50s.

Ainsi, comme illustré sur la figure 6 :
- lorsque la durée de liaison simultanée à la phase de PHM et PHD est inférieure à T1 (5s), de préférence le contrôleur 24 impose une réinitialisation du circuit de commande (le circuit revient alors dans une configuration usine. On efface alors notamment les éventuelles fins de course spécifiques préalablement mémorisées) ;
- lorsque la durée de liaison simultanée à la phase de PHM et PHD est supérieure à T1 et inférieure à T2 (soit compris par exemple entre 5 et 50s, typiquement de l'ordre de 30s) de préférence le contrôleur 24 impose une première configuration, par exemple une configuration banne ;
- lorsque la durée de liaison simultanée à la phase de PHM et PHD est supérieure à T2 (soit de préférence supérieure à 50s), de préférence le contrôleur 24 impose une seconde configuration, par exemple une configuration volet roulant (il s'agit d'ailleurs de préférence d'un retour à la configuration usine volet roulant).

Dans le cadre de l'invention, la configuration banne se distingue de la configuration volet roulant par le fait qu'en configuration banne on force de préférence la motorisation jusqu'à la position de repliement extrême pour garantir un stockage de la toile de banne dans un coffre étanche, alors qu'au contraire, en position volet roulant, on veille à arrêter la motorisation en deçà des positions extrêmes attendues.

En pratique, la durée d'activation des lignes PHM et PHD est contrôlée, pour sélectionner parmi les trois possibilités précitées, réinitialisation, mode banne ou mode volet roulant, en contrôlant la durée d'actionnement de l'une des touches 12 ou 14 après avoir relié les deux fils PHM et PHD entre eux, par exemple à l'aide du cavalier 18.

On rappelle qu'un dispositif de verrouillage mécanique interdit l'activation simultanée des deux touches 12 et 14.

Pour régler les fins de course du système, on procède de préférence comme suit.

Distinguons trois cas : 1) le cas de deux butées réglées automatiquement, 2) le cas d'une butée réglée automatiquement et d'une butée réglée manuellement et 3) le cas de deux butées réglées manuellement.

Dans le cas de deux butées réglées automatiquement, par exemple d'un volet roulant équipé d'une butée physique haute et d'une butée physique basse, on actionne une première touche, par exemple la touche de montée 12. Le tablier s'arrête sur la butée haute et la fin de course se règle automatiquement. La fin de course haute est mémorisée de façon définitive après x arrêts, par exemple quatre arrêts, dans sa plage d'arrêt autorisée. Pour mémoriser la butée opposée, on actionne l'autre touche, soit par exemple la touche de descente 14. Le tablier s'arrête sur la butée basse et la fin de course se règle automatiquement. La fin de course basse est mémorisée de façon définitive après y arrêts, par exemple quatre arrêts, dans sa plage d'arrêt autorisé.

Dans le cas d'une butée réglée automatiquement et d'une butée réglée manuellement, la touche correspondant à la butée à réglage automatique est activée. Par exemple dans le cas d'un volet roulant équipé d'une butée physique haute, uniquement la touche de montée 12 est activée. Le tablier s'arrête sur cette butée et la fin de course se règle automatiquement. Celle-ci est mémorisée de façon définitive après x arrêts, par exemple quatre arrêts, dans sa plage d'arrêt autorisée. Par contre, pour assurer le réglage de l'autre fin de course, soit la fin de course basse selon l'exemple précité, il n'est pas nécessaire d'effectuer y arrêts sur celle-ci. En effet, le contrôleur 24 est adapté pour mémoriser en tant que deuxième fin de course la position à partir de laquelle le système d'occultation est déplacé avant d'atteindre la première fin de course préalablement mémorisé. Ainsi, par exemple si la fin de course en butée haute a été réglée et mémorisée préalablement automatiquement, il suffit après avoir atteint la fin de course basse choisie, d'actionner la touche montée et laisser le tablier effectuer toute sa course jusqu'à la position butée haute préalablement mémorisée pour mémoriser en tant que fin de course basse la position de départ de ce déplacement.

Dans le cas de deux butées réglées manuellement, une première butée est mémorisée en ajustant la fin de course correspondante en utilisant les touches montée et descente puis en validant la mémorisation de cette position sans déplacement du tablier par une commande spécifique des touches, par exemple une séquence de trois appuis successifs rapides sur la touche de sollicitation vers cette butée (soit trois sollicitations de la touche 12 montée pour le réglage de la fin de course haute ou inversement trois sollicitations rapides de la touche 14 de descente pour la mémorisation d'une fin de course basse). Puis, la deuxième butée est mémorisée tout d'abord en ajustant cette fin de course par utilisation des touches montée et descente et une fois la fin de course recherchée obtenue, en actionnant la touche adéquate, de sorte que le tablier atteigne la fin de course préalablement mémorisée. Là encore, comme précédemment, la position à partir de laquelle le système d'occultation est déplacé, avant d'atteindre la première fin de course préalablement mémorisée, est mémorisée en tant que deuxième fin de course.

On notera que pour permettre le fonctionnement précité, le contrôleur 24 est adapté pour détecter la durée d'activation des touches 12 et 14 et comparer cette durée à un ou des seuils déterminés afin d'affecter auxdites touches des fonctions différentes selon leur durée d'activation.

Plus précisément encore, lorsque le contrôleur 24 détecte l'actionnement des touches montée/descente pendant une durée inférieure à un seuil, par exemple 0,5s, il attribue à l'actionnement des touches une commande de programmation, sans déplacement du tablier. Par contre, lorsque le contrôleur 24 décèle l'activation d'une touche pendant un temps supérieur à ce seuil, par exemple supérieur à une seconde, il attribue à cette touche une fonction de commande en déplacement du tablier.

Par ailleurs dans le cadre de l'invention, le contrôleur 24 est adapté de préférence pour assurer un réajustement automatique des fins de course toutes les Z actions, par exemple toutes les 256 actions, sauf dans le cas où les deux fins de course (haute et basse) sont réglées manuellement.

Le réajustement de la fin de course réglée automatiquement s'effectue uniquement dans sa plage d'arrêt autorisée.

Le réajustement de la fin de course réglée manuellement s'effectue en fonction de la position de la fin de course réglée automatiquement et de la longueur de la course du tablier (dans le cadre de la présente invention, on considère en effet que la hauteur du tablier est constante).

On va maintenant décrire, le système à commande radio conforme à la présente invention illustré sur la figure 4 annexée.

On retrouve sur cette figure un boitier de commande (fixe, par exemple mural, ou portable) 110 apte à émettre des codes de commande montée/arrêt/descente, par ondes radio, lors d'actionnement de trois touches respectives 112, 113 et 114, un moteur 130 et une carte de commande 120 comportant un moyen 122 de réception des ordres reçus en provenance du boitier 110, et qui reçoit par ailleurs des signaux de phase ϕ, neutre N, terre T et de fins de course FC1 et FC2.

Les échanges entre l'émetteur 110 et le récepteur 122 peuvent faire l'objet de nombreux modes de réalisation. L'émetteur 110 et le récepteur 122 peuvent être monocanaux, la discrimination entre les différents états résultant de codes spécifiques. L'émetteur 110 et le récepteur 122 peuvent être multicanaux, chaque canal correspondant à un ordre spécifique. Ils peuvent également faire intervenir une combinaison des technologies multi-codes et multi-canaux.

Le cas échéant le choix dans un menu de programmation, entre un mode initialisation, configuration première par exemple banne et configuration seconde par exemple volet roulant, pourrait être obtenu par détection de la durée d'activation simultanée des deux touches 112 et 114, de manière analogique aux dispositions précédemment décrites en regard de la figure 3.

Cependant dans le cadre de la présente invention, on préfère, pour éviter une reprogrammation non intentionnelle, assurer la sélection de programmation à l'aide de moyens spécifiques constitués d'un cable C comportant au moins deux fils : l'un PH1 destiné à être relié à la phase côté alimentation secteur et à la carte d'alimentation du circuit de commande 120, et l'autre PH2 destiné à être relié à une entrée spécifique du contrôleur 124.

Là encore il faut noter que le dispositif fonctionne parfaitement si les connexions entre neutre et phase sont inversées.

En pratique, le câble précité C qui contient les fils PH1 et PH2 loge également les fils de neutre N et de terre T, comme on l'a schématisé sur la figure 4.

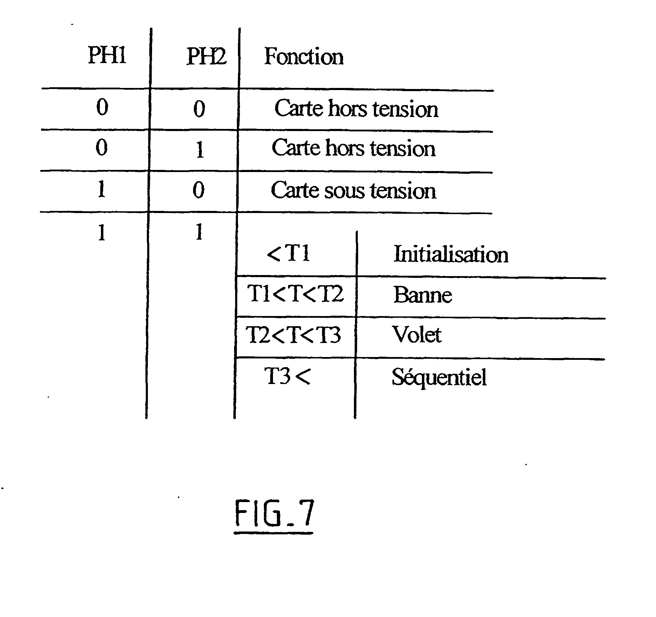

Comme on l'a illustré sur la figure 7 :
. lorsque le fil PH 1 n'est pas alimenté par la phase, état 0, quel que soit l'état du fil PH2, le circuit 120 n'est pas alimenté,
. lorsque le fil PH1 est seul alimenté, soit PH1 à 1 et PH2 à 0, le circuit 120 est alimenté, en attente d'ordre en provenance du boitier 110, en fonctionnement normal, et
. lorsque les deux fils PH1 et PH2 sont reliés simultanément à la phase, état 1, le circuit 120 est placé dans un mode de programmation.

De manière comparable au mode de réalisation précédemment décrit en regard des figures 3, 5 et 6, il suffit donc à un installateur de relier les fils PH1 et PH2, à la phase, à l'extrémité accessible du câble C, pour imposer un mode de programmation.

Et l'utilisation d'un câble C regroupant les deux fils PH1 et PH2 permet de déporter le site d'intervention pour piloter le mode de programmation en tout lieu approprié, par exemple un tableau d'alimentation, par rapport au coffre du système d'occultation qui loge le circuit 120 et son récepteur 122.

Il faut noter également ici que, de manière comparable au mode de réalisation à commande filaire précédemment décrit, le dispositif conforme à la présente invention illustré sur la figure 4, fonctionne parfaitement si les connexions de la phase et du neutre provenant du réseau de distribution électrique sont inversées, c'est à dire si la ligne d'alimentation correspondant à la phase est reliée sur le point commun 133 des bobinages, tandis que la ligne de neutre est alors appliquée sur la ligne PH1 et sur les extrémités des bobinages 132, 134 adjacentes au condensateur 136.

Par ailleurs le mode programmation peut être obtenu en reliant les lignes PH1 et PH2 entre elles, indépendamment d'une ligne d'alimentation électrique, par l'intermédiaire de tout type de liaison entre les lignes concernées, notamment une liaison directe sous forme d'un court-circuit, une liaison résistive, une liaison capacitive, une liaison unidirectionnelle à diode, etc...

Par conséquent la mention de liaison à la « phase » utilisée par la suite pour simplifier le descriptif, devra être considérée comme une liaison préférentielle, mais non limitative.

Par ailleurs là encore de préférence, le contrôleur 124 est sensible au temps de liaison des deux fils PH1 et PH2.

Typiquement, mais non limitativement :
. pour une durée de liaison de PH1 et PH2 inférieure à un seuil T1, par exemple une durée de liaison de l'ordre de 5s, le contrôleur 124 passe dans un mode de réinitialisation, rétablissant le cablage d'origine,
. pour une durée de liaison de PH1 et PH2 comprise entre deux seuils T1 et T2, par exemple une durée de liaison de l'ordre de 30s, le contrôleur 124 passe dans une première configuration, par exemple une configuration banne, et
. pour une durée de liaison de PH1 et PH2 supérieure à un deuxième seuil T2, par exemple une durée de liaison de l'ordre de 60s, le contrôleur passe dans une deuxième configuration, par exemple une configuration volet roulant.

On notera que comme illustré sur la figure 7, dans le cadre de la présente invention, le contrôleur 124 peut être adapté pour détecter une durée de liaison entre PH1 et PH2 supérieure à un troisième seuil, par exemple une durée de liaison de l'ordre de 90s, pour piloter alors un mode de fonctionnement « séquentiel ». Une fois ce mode de fonctionnement séquentiel atteint, la ligne PH2 peut être déconnectée de la ligne PH1. Et toute liaison impulsionnelle ultérieure entre PH1 et PH2, entraîne les commandes alternées suivantes : montée / stop / descente / stop / montée /stop / etc...

Un tel mode de fonctionnement séquentiel peut être utilisé par exemple en cas de déficience du boitier de commande 110.

En pratique la liaison impulsionnelle précitée entre les fils PH1 et PH2 peut être obtenue à l'aide d'un bouton poussoir BP disposé sur l'extrémité du cable C, ou encore par tous moyens de liaison temporaire équivalent, par exemple un simple tronçon de cable équipé de deux pinces crocodiles.

De préférence l'accès à l'extrémité du fil PH2 et au bouton poussoir BP, lorsque celui-ci existe, est protégé, par exemple par une clé, pour éviter une manipulation intempestive de ceux-ci et garantir ainsi leur manipulation par un installateur compétent.

Par ailleurs pendant le fonctionnement séquentiel, de préférence le contrôleur 124 détecte la durée de liaison du fil PH2 à la phase, et compare cette durée de liaison à un seuil : en dessus d'un seuil, par exemple pour une durée de liaison supérieure à 1s, le contrôleur 124 pilote la séquence précitée alternée de montée / arrêt / descente arrêt / montée etc..., tandis que pour une durée de liaison inférieure au seuil, par exemple une durée de liaison inférieure à 0,5s, le contrôleur 124 assimile la liaison temporaire de PH2 à la phase, à un ordre de programmation susceptible de ramener le circuit de commande 120 dans la configuration par défaut antérieure. Cependant à des fins de sécurité ce retour à la configuration par défaut n'est validé qu'après plusieurs brèves liaisons de PH2 à la phase, par exemple 5 de telles liaisons.

Dans le cadre de la présente invention, le boitier 110 comporte en outre un commutateur à deux positions 116. Celui-ci n'est accessible qu'à l'installateur ou un utilisateur averti, après ouverture du boitier 110. Il est utilisé pour moduler les codes émis par le boitier 110 pour distinguer entre un mode de fonctionnement normal et un mode programmation, par exemple sur les bases suivantes :
. commutateur 116 dans une première position de repos: mode de fonctionnement « normal »,
. commutateur 116 dans la seconde position : mode de programmation et de réglage des fins de course, et
. appui sur la touche arrêt 114, puis tout en maintenant celle-ci, placement du commutateur 116 dans la seconde position : mode de programmation des commandes radio.

Dans le fonctionnement normal :
. l'appui sur la touche montée 112 sollicite le tablier à la montée et celui-ci s'arrête sur sa fin de course haute,
. l'appui sur la touche arrêt 113 stoppe le tablier dans son déplacement, et
. l'appui sur la touche descente 114 sollicite le tablier à la descente et celui-ci s'arrête sur sa fin de course basse.

De préférence dans le cadre de la présente invention, le contrôleur 124 pilote de plus un déplacement pas à pas, lorsqu'une combinaison choisie de touches est sollicitée. Par exemple un déplacement pas à pas à la montée, respectivement à la descente, peut être mis en oeuvre lorsque l'une des touches montée 112 ou descente 114 est sollicitée alors que la touche arrêt 113 est préalablement sollicitée et maintenue dans cette position. Un tel mode de fonctionnement pas à pas permet en particulier un réglage précis des fins de course.

Dans le cadre de la présente invention le pilotage en déplacement pas à pas correspond de préférence à un déplacement séquentiel du tablier sur une amplitude limitée contrôlée, entrecoupé de phases d'arrêt pendant une durée suffisante pour permettre à un utilisateur d'intervenir pour interrompre le pilotage pas à pas.

De préférence dans le cadre de la présente invention, l'interruption du pilotage pas à pas est obtenue en appuyant sur la touche arrêt d'un boitier (les touches arrêt et montée ou descente ayant été préalablement relachées, mais le fonctionnement pas à pas maintenu). Cependant en variante, l'interruption du pilotage pas à pas peut être obtenue dès que les touches arrêt et montée ou descente ont été relachées.

Les phases d'arrêt ont une durée minimale de 20 ms (ce qui conduit en pratique compte tenu de l'inertie de l'ensemble, à un arrêt physique du tablier pendant plusieurs msec).

Dans le cadre de la présente invention, le contrôleur est en outre adapté de préférence pour mémoriser une position d'arrêt intermédiaire lorsqu'une combinaison choisie de touches est sollicitée, par exemple le contrôleur peut être adapté pour mémorisrer en tant que position intermédiaire, la position dans laquelle est préalablement situé le tablier lorsque l'on appuie simultanément sur les touches montée et descente d'un boitier de commande, pendant 3 secondes.

De préférence le contrôleur mémorise cette valeur intermédiaire par rapport aux butées de fin de course haute ou basse du tablier. De ce fait la fonction réglage d'un arrêt intermédiaire n'est de préférence possible que si les butées de fin de course ont été préalablement réglées.

Par ailleurs de préférence dans le cadre de la présente invention, tout réglage d'un nouvel arrêt intermédiaire annule le précédent, à moins que des dispositions particulières ne soient prévues pour mémoriser plusieurs positions intermédiaires et non pas une seule.

Selon une autre caractéristique de la présente invention, le contrôleur est adapté pour annuler la fonction déplacement pas à pas lorsqu'un réglage d'un arrêt intermédiaire est effectué.

Le réglage des fins de course est réalisé selon des modalités similaires aux dispositions précédemment décrites pour la commande filaire.

Les fins de course peuvent être réglées de façon manuelle ou automatique, selon l'équipement associé au tablier, indépendamment l'une de l'autre.

Le règlage automatique d'une fin de course est effectif après X arrêts successifs, par exemple 4 arrêts successifs, dans une même plage.

Un réajustement automatique des fins de course s'effectue toutes les Z actions, par exemple 256 actions, sauf dans le cas où les deux fins de course (haute et basse) sont réglées manuellement.

Le réajustement de la fin de course réglée automatiquement s'effectue uniquement dans sa plage d'arrêt autorisée.

Le réajustement de la fin de course réglée manuellement s'effectue en fonction de la position de la fin de course réglée automatiquement et de la longueur de la course du tablier.

La reconnaissance automatique des fins de course est prioritaire sur la reconnaissance manuelle des fins de course. Pour tout réajustement sur butée physique, qu'il provienne cycliquement (toutes les Z actions) ou qu'il soit lié à un décalage du à la mécanique du tablier ou à une erreur de comptage, un réajustement de la butée opposée sera opéré.

Par ailleurs il faut distinguer là encore les 3 cas 1) de 2 butées (physiques) réglées automatiquement, 2) d'une butée (physique) réglée automatiquement et d'une butée (ou position) réglée manuellement et 3) de deux butées (ou positions) réglées manuellement.

Dans le cas de 2 butées réglées automatiquement, par exemple d'un volet roulant équipé d'une butée physique haute et d'une butée physique basse, l'installateur procède comme suit :
. le commutateur 116 du boitier 110 est placé en mode normal,
. la touche montée 112 est appuyée, le tablier s'arrête sur sa butée haute et la fin de course se règle automatiquement, (cette fin de course haute est mémorisée de façon définitive après 4 arrêts dans sa plage d'arrêt autorisée),
. la touche descente 114 est appuyée, le tablier s'arrête sur sa butée basse et la fin de course se règle automatiquement, (cette fin de course basse est mémorisée de façon définitive après 4 arrêts dans sa plage d'arrêt autorisée).

Dans le cas d'une butée réglée automatiquement et d'une butée réglée manuellement, par exemple d'un volet roulant équipé d'une butée physique haute uniquement, l'installateur procède comme suit :
. le commutateur 116 du boitier 110 est placé en mode normal,
. la touche montée 112 est appuyée, le tablier s'arrête sur sa butée haute et la fin de course se règle automatiquement, (cette fin de course haute est mémorisée de façon définitive après 4 arrêts dans sa plage d'arrêt autorisée),
. les touches montée 112 et descente 114 sont sollicitées pour ajuster la butée de fin de course basse recherchée, et lorsque celle-ci est atteinte :
. soit la touche montée 112 est appuyée jusqu'à ce que le tablier atteigne sa fin de course haute précédemment mémorisée, ce qui provoque la mémorisation automatique de la position basse de départ en tant que fin de course basse,
. soit le commutateur 116 est placé en position programmation fins de course, et l'appui sur la touche descente 114 pendant un temps supérieur à un seuil, par exemple de l'ordre de 3s, entraine la mémorisation de la fin de course basse ainsi obtenue (bien évidemment de manière symétrique il s'agit de la touche montée 112 sollicitée pendant 3 s pour mémoriser la fin de course haute).

Dans le cas de deux butées réglées manuellement, par exemple d'un volet roulant non équipé de butée physique et dans l'hypothèse d'une fin de course haute réglée avant la fin de course basse, l'installateur procède comme suit :
. le commutateur 116 du boitier 110 est placé en mode normal,
. les touches montée 112 et descente 114 sont sollicitées pour ajuster la butée de fin de course haute recherchée, et lorsque celle-ci est atteinte :
. le commutateur 116 est placé en position programmation fins de course, et l'appui sur la touche montée 112 pendant un temps supérieur à un seuil, par exemple de l'ordre de 3s, entraine la mémorisation de la fin de course haute ainsi obtenue (bien évidemment de manière symétrique il s'agit de la touche descente 114 sollicitée pendant 3 s pour mémoriser la fin de course basse),
. le commutateur 116 du boitier 110 est placé en mode normal,
. les touches montée 112 et descente 114 sont sollicitées pour ajuster la butée de fin de course basse recherchée, et lorsque celle-ci est atteinte :
. soit la touche montée 112 est appuyée jusqu'à ce que le tablier atteigne sa fin de course haute précédemment mémorisée, ce qui provoque la mémorisation automatique de la position basse de départ en tant que fin de course basse,
. soit le commutateur 116 est placé en position programmation fins de course, et l'appui sur la touche descente 114 pendant un temps supérieur à un seuil, par exemple de l'ordre de 3s, entraine la mémorisation de la fin de course basse ainsi obtenue (bien évidemment de manière symétrique il s'agit de la touche montée 112 sollicitée pendant 3 s pour mémoriser la fin de course haute).

Pour supprimer les règlages de fins de course, il suffit de placer le commutateur 116 en position programmation fins de course et d'appuyer sur la touche arrêt 113 pendant un temps supérieur à un seuil, par exemple de l'ordre de 3s.

Il faut noter que tant dans le mode de commande filaire que dans le cas du mode de commande radio, le système conforme à la présente invention permet de monter indifféramment le motoréducteur sur une extrémité ou l'autre du tube d'enroulement. Il est prévu pour cela des moyens aptes à inverser le sens de rotation du moteur, si nécessaire.

De préférence dans le cas de la commande par liaison radio, l'installateur procède alors comme suit :
. le commutateur 116 est placé en mode réglagles fins de course, et
. la touche arrêt 113 est sollicitée pendant un temps déterminé, par exemple de l'ordre de 1s et tout en la maintenant, la touche montée 112 est sollicitée pendant une durée supérieure à un seuil, par exemple de l'ordre de 3s.

On notera que dans le cas de la commande par liaison filaire, il suffit à l'installateur d'inverser la connexion des deux fils PHM et PHD en sortie du boîtier 10.

Le mode de programmation des commandes radio est de préférence adapté pour assurer sélectivement une affectation ou réaffectation d'une commande radio de base, une affectation d'une commande radio complémentaire, la suppression d'une commande radio complémentaire, ou la suppression d'une commande radio de base et d'une ou de commande(s) radio complémentaire(s).

Ce mode de programmation permet d'apparier les commandes radio 110 au récepteur 122, de sorte qu'un émetteur 110 non reconnu par le récepteur 122 ne puisse pas piloter le circuit 120. Ce mode de programmation consiste à faire reconnaître le bloc émetteur 110 et les ordres émis par ce dernier, par le récepteur 122, selon une séquence d'apprentissage prédéfinie.

On appelle généralement « commande radio de base » un boitier de commande 110 adapté pour commander un système d'occultation spécifique et « commande radio complémentaire » un boitier de commande 110 commun à la commande de plusieurs systèmes d'occultation.

Pour affecter ou réafffecter une commande radio de base, de préférence, l'installateur doit solliciter une touche de la commande dans un certain délai consécutif à une phase de réinitialisation. Pour cela de préférence l'installateur procède comme suit :
. le commutateur 116 de cette commande est placé en position « mode normal »,
. les fils PH1 et PH2 sont reliés pendant 5s pour opérer une réinitialisation,
. le circuit 120 est alors en attente de programmation pendant 60s,
. il suffit alors d'appuyer sur la touche arrêt 113 par exemple pendant 1s, pour adresser une trame de reconnaissance au récepteur 122,
. le mode programmation est quitté dès que la trame est reçue.

Pour affecter ou supprimer une commande radio complémentaire, de préférence l'installateur doit tout d'abord opérer une validation en plaçant la commande de base et la commande complémentaire dans un mode de programmation spécifique puis doit solliciter une touche de la commande complémentaire dans un certain délai consécutif à un actionnement de validation spécifique de la commande de base.

Plus précisément de préférence pour affecter une commande radio complémentaire, l'installateur procède comme suit :
. la commande radio de base et la commande radio complémentaire sont placées en position « programmation commandes radio»,
. la touche montée 112 de la commance radio de base est activée pendant 3s,
. le circuit 120 est alors en attente de programmation pendant 60s,
. il suffit alors d'appuyer sur la touche arrêt 113 de la commande radio complémentaire par exemple pendant 1s, pour adresser une trame de reconnaissance au récepteur 122,
. le mode programmation est quitté dès que cette trame est reçue.

Pour supprimer une commande radio complémentaire, l'installateur procède comme suit :
. la commande radio de base et la commande radio complémentaire sont placées en position « programmation commandes radio»,
. la touche descente 114 de la commance radio de base est activée pendant 3s,
. le circuit 120 est alors en attente de programmation pendant 60s,
. il suffit alors d'appuyer sur la touche arrêt 113 de la commande radio complémentaire par exemple pendant 1s, pour adresser une trame de reconnaissance au récepteur 122,
. le mode programmation est quitté dès que cette trame est reçue.

Pour supprimer la commande de radio de base et la ou les commandes radio complémentaires, l'installateur procède comme suit :
. la commande radio de base est placée en position « programmation commandes radio»,
. la touche arrêt 113 de la commande radio de base est activée pendant 3s,
. le circuit 120 est alors en attente de programmation pendant 60s afin d'autoriser la réaffectation d'une commande radio de base par réception d'une nouvelle trame de reconnaissance si l'utilisateur le souhaite,
. le mode programmation est quitté dès que cette trame est reçue.

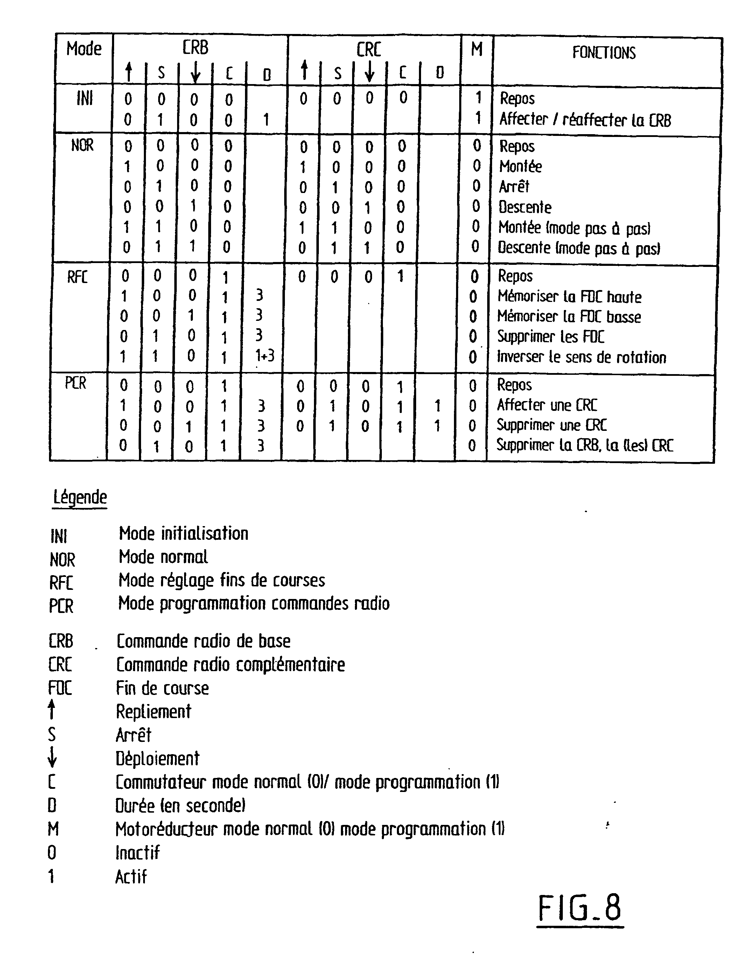

La synthèse des commandes qui viennent d'être décrites pour la commande radio est illustrée sur la figure 8.

## Revendications

1. Dispositif de commande de systèmes d'occultation motorisés, tels que des stores, bannes, volets, portes ou équivalents, destinés notamment à masquer la lumière et/ou à constituer un barrage contre les intrusions, comprenant un contrôleur (20, 120) apte à piloter un déplacement du tablier, lorsqu'une combinaison choisie de touches (12, 14, ; 112, 113, 114, 116) est sollicitée, **caractérisé par le fait que** le contrôleur (20, 120) est adapté pour assurer le pilotage en déplacement pas à pas du tablier, correspond à un déplacement séquentiel du tablier sur une amplitude limitée contrôlée entrecoupé de phases d'arrêt pendant une durée suffisante pour permettre à un utilisateur d'intervenir pour interrompre le pilotage pas à pas, lorsqu'une commande choisie de touches (12, 14 ; 112, 113, 114, 116) est opérée.

2. Dispositif selon la revendication 1, **caractérisé par le fait que** les phases d'arrêt ont une durée minimale de 20 ms.

3. Dispositif selon l'une des revendications 1 ou 2, **caractérisé par le fait que** le contrôleur (20, 120) est en outre adapté pour mémoriser une position d'arrêt intermédiaire lorsqu'une combinaison choisie de touches (12, 14 ; 112, 113, 114, 116) est sollicitée.

4. Dispositif selon l'une des revendications 1 à 3, **caractérisé par le fait que** le contrôleur (20, 120) est adapté pour annuler la fonction déplacement pas à pas lorsqu'un réglage d'un arrêt intermédiaire est effectué.

5. Dispositif selon l'une des revendications 1 à 4, **caractérisé par le fait que** le contrôleur (20, 120) pilote un déplacement pas à pas à la montée, respectivement à la descente lorsque l'une des touches montée (112) ou descente (114) est sollicitée alors que la touche arrêt (113) est préalablement sollicitée et maintenue dans cette position.

6. Dispositif selon l'une des revendications 1 à 5, **caractérisé par le fait que** le contrôleur (20, 120) est adapté pour mémoriser en tant que position intermédiaire, la position dans laquelle est préalablement situé le tablier lorsque l'on appuie simultanément sur les touches montée (112) et descente (114) d'un boitier de commande, pendant 3 secondes.

7. Dispositif selon l'une des revendications 1 à 6, **caractérisé par le fait que** le contrôleur (20, 120) mémorise une position d'arrêt intermédiaire par rapport à des butées de fin de course haute ou basse.

8. Dispositif selon l'une des revendications 1 à 7, **caractérisé par le fait que** l'interruption du pilotage pas à pas est obtenue en appuyant sur la touche arrêt (113) d'un boitier.

9. Dispositif selon l'une des revendications 1 à 8, **caractérisé par le fait que** tout réglage d'un nouvel arrêt intermédiaire annule le précédent.

## Patentansprüche

1. Vorrichtung zur Steuerung von motorbetriebenen Verdunkelungssystemen, wie z. B. Markisen, Abdeckungen, Jalousien, Türen oder dergleichen, die insbesondere dazu bestimmt sind, das Licht abzuschirmen und/oder eine Sperre gegen das Eindringen zu bilden, die einen Controller (20, 120) umfaßt, der dazu geeignet ist, eine Bewegung des Abdeckelements zu steuern, wenn eine gewählte Kombination aus Tasten (12, 14; 112, 113, 114, 116) gedrückt wird, **dadurch gekennzeichnet, daß** der Controller (20, 120) dazu geeignet ist, die Ansteuerung zur schrittweisen Bewegung des Abdeckelements sicherzustellen, die einer aufeinanderfolgenden Bewegung des Abdeckelements mit einer gesteuerten, begrenzten Amplitude entspricht, die durch Haltphasen mit einer Dauer unterbrochen wird, die ausreicht, um es einem Benutzer zu gestatten, einzugreifen, um die schrittweise Ansteuerung zu unterbrechen, wenn eine ausgewählte Betätigung von Tasten (12, 14; 112, 113, 114, 116) vorgenommen wird.

2. Vorrichtung nach Anspruch 1, **dadurch gekennzeichnet, daß** die Haltphasen eine minimale Dauer von 20 ms haben.

3. Vorrichtung nach einem der Ansprüche 1 oder 2 , **dadurch gekennzeichnet, daß** der Controller (20, 120) außerdem dazu eingerichtet ist, eine Zwischenhaltposition zu speichern, wenn eine ausgewählte Kombination von Tasten (12, 14; 112, 113, 114, 116) gedrückt wird.

4. Vorrichtung nach einem der Ansprüche 1 bis 3, **dadurch gekennzeichnet, daß** der Controller (20, 120) dazu eingerichtet ist, die Funktion zum schrittweisen Bewegen aufzuheben, wenn ein Zwischenhalt bewirkt wird.

5. Vorrichtung nach einem der Ansprüche 1 bis 4, **dadurch gekennzeichnet, daß** der Controller (20, 120) eine schrittweise Bewegung beim Anstieg bzw. beim Abstieg ansteuert, wenn eine der Anstiegtasten (112) oder Abstiegtasten (114) gedrückt wird, wenn die Halttaste (113) vorher gedrückt wird und in dieser Lage gehalten wird.

6. Vorrichtung nach einem der Ansprüche 1 bis 5, **dadurch gekennzeichnet, daß** der Controller (20, 120) dazu eingerichtet ist, als Zwischenposition-diejenige Position zu speichern, in die das Abdeckelement vorher gelangt ist, wenn man gleichzeitig die Anstiegtaste (112) und die Abstiegtaste (114) eines Steuerkastens 3 Sekunden lang drückt.

7. Vorrichtung nach einem der Ansprüche 1 bis 6, **dadurch gekennzeichnet, daß** der Controller (20, 120) eine Zwischenhaltposition in Bezug auf die Endanschläge des Aufwärts- oder Abwärts-Bewegungsweges speichert.

8. Vorrichtung nach einem der Ansprüche 1 bis 7, **dadurch gekennzeichnet, daß** die Unterbrechung der schrittweisen Steuerung erhalten wird, wenn man auf die Halttaste (113) eines Steuerkastens drückt.

9. Vorrichtung nach einem der Ansprüche 1 bis 8, **dadurch gekennzeichnet, daß** jegliche Einstellunng eines neuen Zwischenhalts den vorhergehenden aufhebt.

## Claims

1. A device for controlling motor-driven closure systems, such as blinds, awnings, shutters, doors or the equivalent, intended in particular for masking light and/or for constituting a barrier against intrusions, the device comprising a controller (20, 120) suitable for controlling displacement of the panel when a selected combination of keys (12, 14; 112, 113, 114, 116) is actuated, the device being **characterized by** the fact that the controller (20, 120) is adapted to control the panel in stepwise displacement, corresponding to sequential displacement of the panel over a controlled limited amplitude interposed with stop stages of sufficient duration to enable a user to intervene to interrupt the stepwise control, on operating a selected control key (12, 14; 112, 113, 114, 116).

2. A device according to claim 1, **characterized by** the fact that the stop stages have a minimum duration of 20 ms.

3. A device according to claim 1 or claim 2, **characterized by** the fact that the controller (20, 120) is also adapted to store an intermediate stop position when a selected combination of keys (12, 14; 112, 113, 114, 116) is operated.

4. A device according to any one of claims 1 to 3, **characterized by** the fact that the controller (20, 120) is adapted to cancel the stepwise displacement function when an intermediate stop adjustment is performed.

5. A device according to any one of claims 1 to 4, **characterized by** the fact that the controller (20, 120) controls stepwise displacement in an upward or a downward direction when one of the up and down keys (112 or 114) is actuated, while the stop key (113) has previously been actuated and is held in the actuated position.

6. A device according to any one of claims 1 to 5, **characterized by** the fact that the controller (20, 120) is adapted to store as an intermediate position, the position in which the panel was previously situated while pressing simultaneously on the up and down keys (112, 114) of a control unit, for 3 seconds.

7. A device according to any one of claims 1 to 6, **characterized by** the fact that the controller (20, 120) stores a stop position that is intermediate relative to high and low end-of-stroke abutments.

8. A device according to any one of claims 1 to 7, **characterized by** the fact that stepwise control is interrupted by pressing on the stop key (113) of a control unit.

9. A device according to any one of claims 1 to 8, **characterized by** the fact that any setting of a new intermediate stop cancels the preceding intermediate stop.
